# EUROPÄISCHE PATENTANMELDUNG

(11) **EP 2 284 631 A1**
(43) Veröffentlichungstag der Anmeldung: **16.02.2011**
(21) Anmeldenummer: 09009343.6
(22) Anmeldetag: 17.07.2009
(51) Int. Cl.: G05B 23/02

(54) **Verfahren zum Betrieb eines Fahrzeugdiagnosesystems, Steuerungsprogramm und Fahrzeugdiagnosesystem**

(71) Anmelder: SIEMENS AKTIENGESELLSCHAFT, 80333 München (DE)
(72) Erfinder: Köhler, Ralf, 67160 Wissembourg (FR)

(57) **Zusammenfassung**

In einem Fahrzeugdiagnosesystem werden Komponenten und/oder Funktionen von zu prüfenden oder einzustellenden Fahrzeugen durch Knoten in einem hierarchisch gegliederten Diagnoseobjektbaum repräsentiert. Mögliche Fehler in Fahrzeugkomponenten und/oder -funktionen werden durch Knoten in einem hierarchisch gegliederten Fehlerobjektbaum repräsentiert. Dabei ist zumindest ein Knoten des Diagnoseobjektbaums durch zumindest einen Knoten des Fehlerobjektbaums referenzierbar. Den Diagnoseobjektbaum und Fehlerobjektbaum umfassende Fahrzeugdiagnosedaten werden in einer Datenbasis des Fahrzeugdiagnosesystems erfaßt, validiert und für einen Zugriff durch Feldgeräte bereitgestellt. Bei Nutzung der Fahrzeugdiagnosedaten durch ein Feldgerät während eines Prüf- und/oder Einstellvorgangs wird ein Diagnoseprotokoll aufgezeichnet und an eine Auswerteeinrichtung des Fahrzeugdiagnosesystems übermittelt. Anhand des Diagnoseprotokolls werden unter Berücksichtigung jeweils genutzter Fahrzeugdiagnosedaten durch die Auswerteeinrichtung zu ändernde Referenzen auf Knoten des Diagnoseobjektbaums oder zu ändernde Symptomgewichte ermittelt. Durch die Auswerteeinrichtung ermittelte Änderungen der Fahrzeugdiagnosedaten werden zur Verifizierung vor einer Übernahme in die Datenbasis bereitgestellt.

## Beschreibung

In herkömmlichen Fahrzeugsdiagnosesystemen werden auf Feldebene bzw. in einer Werkstatt während eines Prüf- oder Einstellvorgangs erfaßte Fahrzeugdaten innerhalb des jeweiligen Fahrzeugdiagnosesystems zurückgemeldet. Anhand der zurückgemeldeten Fahrzeugdaten werden beispielsweise Fehlerhäufigkeiten, Fehlerrelevanz, Nutzungsprofile von Diagnosetests oder Anzahl von Testschritten bis zur Erkennung eines fehlerhaften Bauteils ausgewertet. Die Fahrzeugdaten werden dabei isoliert von dem jeweiligen Prüf- oder Einstellvorgang zugrundeliegenden Diagnoseprozeßschritten analysiert. Liefern zurückgemeldete Fahrzeugdaten relevante Erkenntnisse, werden erforderliche Änderungen von im Fahrzeugdiagnosesystem definierten Diagnoseprozeßschritten manuell vorgenommen.

Darüber hinaus existieren bereits Fahrzeugdiagnosesysteme, in denen Expertenregeln zur Durchführung von Diagnosevorgängen bereitgestellt werden. Die Expertenregeln ermöglichen eine Verwertung von Erfahrungswissen in für ein Fahrzeugdiagnosesystem definierten Diagnoseprozessen. Eine Formulierung der Expertenregeln erfolgt jedoch manuell. Daher ermöglicht auch eine Verwendung von Expertenregeln per se keine automatisierte Anpassung von für ein Fahrzeugdiagnosesystem definierten Diagnoseprozessen.

Der vorliegenden Erfindung liegt die Aufgabe zugrunde, ein Verfahren zu schaffen, das eine automatische Anpassung von für ein Fahrzeugdiagnosesystem vordefinierten Diagnoseprozessen ermöglicht, sowie eine geeignete Implementierung des Verfahrens anzugeben.

Diese Aufgabe wird erfindungsgemäß durch ein Verfahren mit den in Anspruch 1 angegebenen Merkmalen, durch ein Steuerungsprogramm mit den in Anspruch 9 angegebenen Merkmalen und durch ein Fahrzeugdiagnosesystem mit den in Anspruch 10 angegebenen Merkmalen gelöst. Vorteilhafte Weiterbildungen der vorliegenden Erfindung sind in den abhängigen Ansprüchen angegeben.

Erfindungsgemäß werden in einem Fahrzeugdiagnosesystem Komponenten und/oder Funktionen von zu prüfenden oder einzustellenden Fahrzeugen durch Knoten in einem hierarchisch gegliederten Diagnoseobjektbaum repräsentiert. Mögliche Fehler in Fahrzeugkomponenten und/oder -funktionen werden durch Knoten in einem hierarchisch gegliederten Fehlerobjektbaum repräsentiert. Dabei ist zumindest ein Knoten des Diagnoseobjektbaums durch zumindest einen Knoten des Fehlerobjektbaums referenzierbar. Den Diagnoseobjektbaum und Fehlerobjektbaum umfassende Fahrzeugdiagnosedaten werden in einer Datenbasis des Fahrzeugdiagnosesystems erfaßt, validiert und für einen Zugriff durch Feldgeräte bereitgestellt. Ein Feldgerät kann beispielsweise ein Prüfgerät oder eine einer Fahrzeugwerkstatt zugeordnete Datenverarbeitungseinrichtung sein.

Bei Nutzung der Fahrzeugdiagnosedaten durch ein Feldgerät während eines Prüf- und/oder Einstellvorgangs wird erfindungsgemäß ein Diagnoseprotokoll aufgezeichnet und an eine Auswerteeinrichtung des Fahrzeugdiagnosesystems übermittelt. Anhand des Diagnoseprotokolls werden unter Berücksichtigung jeweils genutzter Fahrzeugdiagnosedaten durch die Auswerteeinrichtung zu ändernde Referenzen auf Knoten des Diagnoseobjektbaums oder zu ändernde Symptomgewichte ermittelt. Durch die Auswerteeinrichtung ermittelte Änderungen der Fahrzeugdiagnosedaten werden zur Verifizierung vor einer Übernahme in die Datenbasis bereitgestellt. Auf diese Weise wird eine automatische Anpassung von für ein Fahrzeugdiagnosesystem vordefinierten Diagnoseprozessen ermöglicht.

Die Erfindung wird nachfolgend an einem Ausführungsbeispiel anhand der Zeichnung näher erläutert. Es zeigt
- Figur 1: eine schematische Darstellung eines Fahrzeugdiagno- sesystems,
- Figur 2: ein Ablaufdiagramm zum Betrieb des in Figur 1 dar- gestellten Fahrzeugdiagnosesystems.

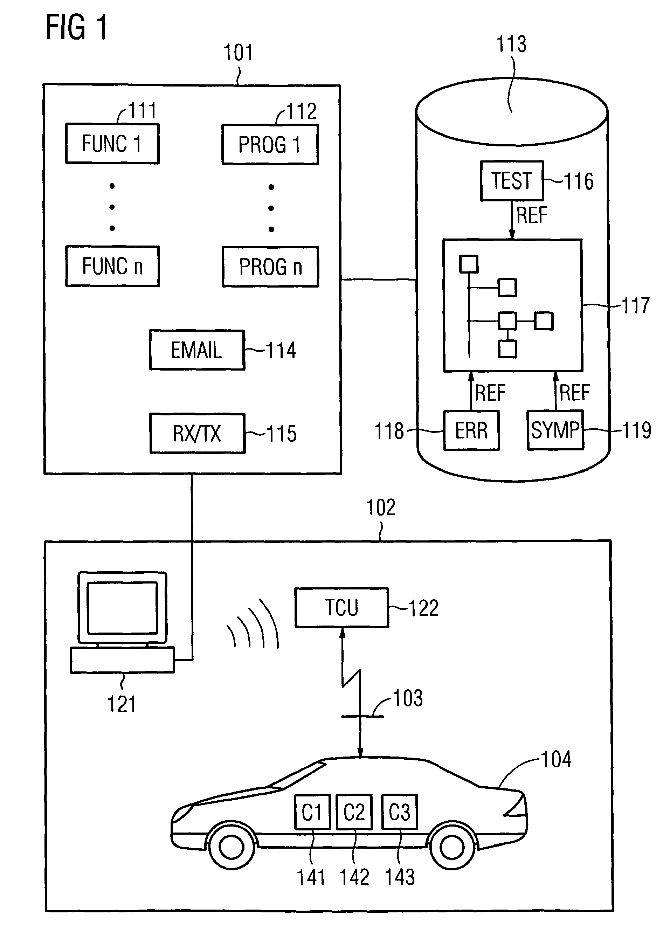

Das in Figur 1 dargestellte Fahrzeugdiagnosesystem 101 umfaßt eine Ablaufsteuerungseinrichtung für Funktionen 111 und Prüfprogramme 112. Dem Fahrzeugdiagnosesystem 101 ist eine Datenbasis 113 zugeordnet, in der Fahrzeugdiagnosedaten gespeichert sind. Die Fahrzeugdiagnosedaten umfassen einen hierarchisch gegliederten Diagnoseobjektbaum 117 und einen hierarchisch gegliederten Fehlerobjektbaum 118. Komponenten und Funktionen von zu prüfenden oder einzustellenden Fahrzeugen sind durch Knoten in im Diagnoseobjektbaum 117 repräsentiert. Die Komponenten und Funktionen sind beispielsweise Steuerungsgeräte 141-143 eines in einer Werkstatt 102 gewarteten Fahrzeugs 104. Mögliche Fehler in Fahrzeugkomponenten oder -funktionen sind durch Knoten im Fehlerobjektbaum 118 repräsentiert. Der Diagnoseobjektbaum 117 und der Fehlerobjektbaum 118 sind durch von Knoten des Fehlerobjektbaums 118 ausgehende Referenzen auf Knoten des Diagnoseobjektbaums 117 miteinander verknüpft.

Nutzerseitig wahrnehmbare Fehlersymptome werden durch Knoten in einem hierarchisch gegliederten Fehlersymptombaum 119 repräsentiert, der ebenfalls von den Fahrzeugdiagnosedaten umfaßt ist. Durch Knoten des Fehlersymptombaums 119 können Knoten des Diagnoseobjektbaums 117 oder des Fehlerobjektbaums 118 referenziert werden. Darüber hinaus können vorgebbare Knoten des Fehlersymptombaums 119 als Supersymptom zu einer Gruppe zusammengefaßt werden, die Knoten des Diagnoseobjektbaums 117 oder des Fehlerobjektbaums 118 referenziert. In entsprechender Weise können vorgebbare Knoten des Fehlerobjektbaums 118 zu einer Gruppe zusammengefaßt werden, die einen oder mehrere Knoten des Diagnoseobjektbaums referenziert.

Des weiteren umfassen die Fahrzeugdiagnosedaten Prüfprogramme oder Testfunktionen 116, die Knoten des Diagnoseobjektbaums 117 zugeordnet sind. Von einem Prüfprogramm oder einer Testfunktion 116 wird zunächst eine durch einen zugeordneten Knoten repräsentierte Komponente oder Funktion erfaßt. Zusätzlich werden in ein Prüfprogramm oder eine Testfunktion 116 auch sämtliche hierarchisch untergeordneten Komponenten bzw. Funktionen oder andere vorgebbare Komponenten bzw. Funktionen einbezogen.

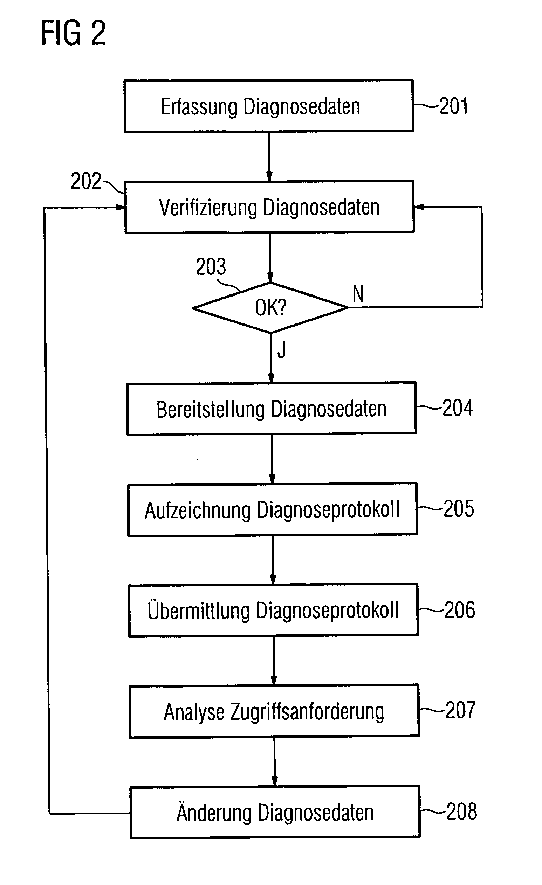

Entsprechend dem in Figur 2 dargestellten Ablaufdiagramm erfolgt durch das Fahrzeugdiagnosesystem 101 nach einer Erfassung der Fahrzeugdiagnosedaten (Schritt 201) eine Verifizierung der Fahrzeugdiagnosedaten (Schritt 202). Erfassung und Verifizierung können beispielsweise mittels eines Engineering-Tools durchgeführt werden. Anschließend wird in Schritt 203 überprüft, ob die Verifizierung erfolgreich verlaufen ist. Ist dies nicht der Fall, erfolgt in Schritt 201 eine erneute Erfassung geänderter Fahrzeugdiagnosedaten. Andernfalls werden die verifizierten Fahrzeugdiagnosedaten entsprechend Schritt 204 beispielsweise mittels einer Sende-/Empfangseinrichtung 115 für einen Zugriff durch Feldgeräte auf Werkstattebene bereitgestellt. Ein Feldgerät ist beispielsweise ein mobiles Prüfgerät 122 oder eine Datenverarbeitungseinrichtung 121 zur Replizierung und Verteilung von Fahrzeugdiagnosedaten auf Werkstattebene. Mittels des mit Datenverarbeitungseinrichtung 121 beispielsweise über eine Funkverbindung in Verbindung stehenden mobilen Prüfgeräts 122 kann über eine Fahrzeugkommunikationsschnittstelle 103 auf in Steuerungsgeräten 141-143 gespeicherte Steuerungsgeräteparameter zugegriffen werden.

Bei Nutzung der Fahrzeugdiagnosedaten durch das Prüfgerät 122 während eines Prüf- oder Einstellvorgangs wird entsprechend Schritt 205 ein Diagnoseprotokoll aufgezeichnet und anschließend über die Sende-/Empfangseinrichtung 115 an eine Auswerteeinrichtung 114 des Fahrzeugdiagnosesystems 101 übermittelt (Schritt 206).

Anhand des Diagnoseprotokolls werden in Schritt 207 unter Berücksichtigung jeweils genutzter Fahrzeugdiagnosedaten durch die Auswerteeinrichtung 114 zu ändernde Referenzen auf Knoten des Diagnoseobjektbaums oder zu ändernde Symptomgewichte ermittelt. Dabei werden beispielsweise auch Versionsangaben der jeweils genutzten Fahrzeugdiagnosedaten erfaßt und ausgewertet. Außerdem werden durch die Auswerteeinrichtung 114 anhand des Diagnoseprotokolls Änderungen von durch eine Testfunktion oder ein Prüfprogramm berücksichtigten Komponenten oder Funktionen ermittelt. Abschließend werden durch die Auswerteeinrichtung ermittelte Änderungen der Fahrzeugdiagnosedaten in Schritt 208 zusammengestellt und zur Verifizierung entsprechend Schritt 202 vor einer Übernahme in die Datenbasis 113 bereitgestellt.

Das vorangehend beschriebene Verfahren wird bevorzugt durch ein Steuerungsprogramm implementiert, das in einen Arbeitsspeicher einer Rechnereinheit ladbar ist. Das Steuerungsprogramm weist zumindest einen Codeabschnitt auf, bei dessen Ausführung die Schritte des beschriebenen Verfahrens durchgeführt werden, wenn das Steuerungsprogramm in der Rechnereinheit abläuft.

Das vorangehend beschriebene Verfahren ermöglicht eine Strukturoptimierung von Fahrzeugdiagnosedaten. Hierdurch werden insbesondere Diagnosedauer - Anzahl von Testschritten für Diagnose - und Diagnosequalität verbessert. Insgesamt resultiert hieraus eine durch Werkstattkunden wahrnehmbar verbesserte Servicequalität von Werkstätten. Außerdem ermöglicht das vorangehend beschriebene Verfahren eine Senkung von Investitionskosten für Fahrzeugdiagnosesysteme, da sich eine Entwicklung anwendungs- oder kundenspezifischer Feedbacksysteme erübrigt.

Die Anwendung der vorliegenden Erfindung ist nicht auf das beschriebene Ausführungsbeispiel beschränkt.

## Patentansprüche

1. Verfahren zum Betrieb eines Fahrzeugdiagnosesystems, bei dem
- Komponenten und/oder Funktionen von zu prüfenden oder einzustellenden Fahrzeugen durch Knoten in einem hierarchisch gegliederten Diagnoseobjektbaum repräsentiert werden,
- mögliche Fehler in Fahrzeugkomponenten und/oder -funktionen durch Knoten in einem hierarchisch gegliederten Fehlerobjektbaum repräsentiert werden, wobei zumindest ein Knoten des Diagnoseobjektbaums durch zumindest einen Knoten des Fehlerobjektbaums referenzierbar ist,
- den Diagnoseobjektbaum und Fehlerobjektbaum umfassende Fahrzeugdiagnosedaten in einer Datenbasis des Fahrzeugdiagnosesystems erfaßt, validiert und für einen Zugriff durch Feldgeräte bereitgestellt werden,
- bei Nutzung der Fahrzeugdiagnosedaten durch ein Feldgerät während eines Prüf- und/oder Einstellvorgangs ein Diagnoseprotokoll aufgezeichnet und an eine Auswerteeinrichtung des Fahrzeugdiagnosesystems übermittelt wird,
- anhand des Diagnoseprotokolls unter Berücksichtigung jeweils genutzter Fahrzeugdiagnosedaten durch die Auswerteeinrichtung zu ändernde Referenzen auf Knoten des Diagnoseobjektbaums oder zu ändernde Symptomgewichte ermittelt werden,
- durch die Auswerteeinrichtung ermittelte Änderungen der Fahrzeugdiagnosedaten zur Verifizierung vor einer Übernahme in die Datenbasis bereitgestellt werden.

2. Verfahren nach Anspruch 1,
bei dem nutzerseitig wahrnehmbare Fehlersymptome durch Knoten in einem hierarchisch gegliederten Fehlersymptombaum repräsentiert werden, wobei zumindest ein Knoten des Diagnoseobjektbaums oder des Fehlerobjektbaums durch zumindest einen Knoten des Fehlersymptombaums referenzierbar ist, und bei dem die Fahrzeugdiagnosedaten den Fehlersymptombaum umfassen.

3. Verfahren nach Anspruch 2,
bei dem vorgebbare Knoten des Fehlersymptombaums zu einer Gruppe zusammenfaßbar sind, die zumindest einen Knoten des Diagnoseobjektbaums oder des Fehlerobjektbaums referenziert.

4. Verfahren nach einem der Ansprüche 1 bis 3,
bei dem vorgebbare Knoten des Fehlerobjektbaums zu einer Gruppe zusammenfaßbar sind, die zumindest einen Knoten des Diagnoseobjektbaums referenziert.

5. Verfahren nach einem der Ansprüche 1 bis 4,
bei dem die Fahrzeugdiagnosedaten zu Knoten des Diagnoseobjektbaums zuordenbare Testfunktionen oder Prüfprogramme umfassen.

6. Verfahren nach Anspruch 5,
bei dem durch eine Testfunktion oder ein Prüfprogramm eine durch einen zugeordneten Knoten repräsentierte Komponente oder Funktion sowie dieser hierarchisch untergeordnete Komponenten oder Funktionen und/oder vorgebbare Komponenten und/oder Funktionen berücksichtigt werden.

7. Verfahren nach einem der Ansprüche 5 oder 6,
bei dem anhand des Diagnoseprotokolls durch die Auswerteeinrichtung Änderungen von durch eine Testfunktion oder ein Prüfprogramm berücksichtigten Komponenten oder Funktionen ermittelt werden.

8. Verfahren nach einem der Ansprüche 1 bis 7,
bei dem ein Feldgerät ein Prüfgerät oder eine einer Fahrzeugwerkstatt zugeordnete Datenverarbeitungseinrichtung ist.

9. Steuerungsprogramm, das in einen Arbeitsspeicher einer Rechnereinheit ladbar ist und zumindest einen Codeabschnitt aufweist, bei dessen Ausführung ein Verfahren nach einem der Ansprüche 1 bis 8 durchgeführt wird, wenn das Steuerungsprogramm in der Rechnereinheit abläuft.

10. Fahrzeugdiagnosesystem mit
- einer Datenbasis zur Speicherung von einen hierarchisch gegliederten Diagnoseobjektbaum und einen hierarchisch gegliederten Fehlerobjektbaum umfassenden Fahrzeugdiagnosedaten, wobei Komponenten und/oder Funktionen von zu prüfenden oder einzustellenden Fahrzeugen durch Knoten in im Diagnoseobjektbaum repräsentiert sind, und wobei mögliche Fehler in Fahrzeugkomponenten und/oder -funktionen durch Knoten im Fehlerobjektbaum repräsentiert sind, und wobei zumindest ein Knoten des Diagnoseobjektbaums durch zumindest einen Knoten des Fehlerobjektbaums referenzierbar ist,
- Mitteln zur Erfassung, Validierung und Bereitstellung von Fahrzeugdiagnosedaten für einen Zugriff durch Feldgeräte,
- Mitteln zum Empfang eines bei Nutzung der Fahrzeugdiagnosedaten durch ein Feldgerät während eines Prüf- und/oder Einstellvorgangs aufgezeichneten Diagnoseprotokolls,
- einer Auswerteeinheit zur Ermittlung von zu ändernden Referenzen auf Knoten des Diagnoseobjektbaums oder von zu ändernden Symptomgewichte anhand des Diagnoseprotokolls unter Berücksichtigung jeweils genutzter Fahrzeugdiagnosedaten,
- Mitteln zur Bereitstellung von durch die Auswerteeinrichtung ermittelten Änderungen der Fahrzeugdiagnosedaten für eine Verifizierung vor einer Übernahme in die Datenbasis.
